# EUROPEAN PATENT APPLICATION

(11) **EP 3 327 548 A1**
(43) Date of publication of application: **30.05.2018**
(21) Application number: 17202610.6
(22) Date of filing: 20.11.2017
(51) Int. Cl.: G06F 3/01, H04N 21/00

(54) **METHOD, DEVICE AND TERMINAL FOR PROCESSING LIVE SHOWS**

(30) Priority: 24.11.2016 CN 201611045733
(71) Applicant: Beijing Xiaomi Mobile Software Co., Ltd., Beijing 100085 (CN)
(72) Inventor: FENG, Zhiyong, Beijing, 100085 (CN); LIN, Xinsheng, Beijing, 100085 (CN)
(74) Representative: Jeffrey, Philip Michael

(57) **Abstract**

The present disclosure relates to a method, a device and a terminal for processing live shows, wherein the method includes: acquiring selection information of the live shows from a user (S11), the selection information including identifiers of at least two live shows; determining each live show corresponding to each identifier (S12); and placing each live show in the same Virtual Reality (VR) scene for displaying to the user (S13). Therefore, multiple live shows are placed in the same VR scene by virtue of own characteristics of VR equipment, and the user may see a 360-degree panoramic scene and watch the multiple live shows by moving the head, thereby improving a watching experience of the user.

## Description

### TECHNICAL FIELD

The present disclosure generally relates to the technical field of terminals, and more particularly, to a method, a device and a terminal for processing live shows.

### BACKGROUND

Along with development of a terminal technology, many users watch live shows by adopting terminals, and each live show have live pictures.

In a related technology, a user may select a host on a terminal, and then the terminal displays a live show of the host.

However, in the related technology, due to a limited size of a screen of a terminal, particularly a limited size of a mobile terminal, a user may merely watch one live show on the terminal, so that only one live show may be displayed on the terminal and a watching experience of the user is influenced.

### SUMMARY

Accordingly, the present invention provides a method, a device and a terminal for processing live shows, in accordance with claims which follow.

According to a first aspect, the invention relates to a method for processing live shows, including:
selection information of the live shows is acquired from a user, the selection information including identifiers of at least two live shows;
each live show corresponding to each identifier is determined; and
each live show is placed in the same Virtual Reality (VR) scene for displaying to the user.

According to an exemplary embodiment, after the step that each live show is placed in the same VR scene for displaying to the user, the method may further include that:
a focal position of eyes of the user is acquired, and a live show corresponding to the focal position is determined; and
a sound of the live show corresponding to the focal position is played, and sounds of other live shows are turned off.

According to an exemplary embodiment, after the step that each live show is placed in the same VR scene for displaying to the user, the method may further include that:
the focal position of the eyes of the user is acquired, and a live show corresponding to the focal position is determined; and
the live show corresponding to the focal position is magnified, and other live shows are minified.

According to an exemplary embodiment, after the step that each live show is placed in the same VR scene for displaying to the user, the method may further include that:
the focal position of the eyes of the user is acquired, and the live show corresponding to the focal position is determined; and
input information of the user is received, and the input information is transmitted to the live show corresponding to the focal position.

According to a particular embodiment, the input information may include at least one of:
voice information, text information and picture information.

The technical solution provided by the embodiments of the present disclosure may achieve the following beneficial effects: the selection information is acquired from the user, the selection information including the identifiers of at least two live shows; each live show corresponding to each identifier is determined; and each live show is placed in the same VR scene for displaying to the user. Therefore, multiple live shows are placed in the same VR scene by virtue of own characteristics of VR equipment, and the user may see a 360-degree panoramic scene and watch the multiple live shows by moving the head, thereby improving a watching experience of the user.

According to a second aspect, the invention relates to a device for processing live shows is provided, comprising:
an acquisition module, configured to acquire selection information of the live shows from a user, the selection information including identifiers of at least two live shows;
a determination module, configured to determine each live show corresponding to each identifier; and
a display module, configured to place each live show in the same VR scene for displaying to the user.

According to a particular embodiment, the device may further include:
a sound processing module, configured to, after the display module places each live show in the same VR scene for displaying to the user, acquire a focal position of eyes of the user, determine a live show corresponding to the focal position, play a sound of the live show corresponding to the focal position, and turn off sounds of other live shows.

According to a particular embodiment, the device may further include:
a show processing module, configured to, after the display module places each live show in the same VR scene for displaying to the user, acquire the focal position of the eyes of the user, determine a live show corresponding to the focal position, magnify the live show corresponding to the focal position, and minify other live shows.

According to a particular embodiment, the device may further include:
an information processing module, configured to, after the display module places each live show in the same VR scene for displaying to the user, acquire the focal position of the eyes of the user, determine the live show corresponding to the focal position, receive input information of the user, and transmit the input information to the live show corresponding to the focal position.

According to a particular embodiment, the input information may include at least one of:
voice information, text information and picture information.

The technical solution provided by the embodiments of the present disclosure may achieve the following beneficial effects: the selection information of the live shows is acquired from the user, the selection information including the identifiers of at least two live shows; each live show corresponding to each identifier is determined; and each live show is placed in the same VR scene for displaying to the user. Therefore, multiple live shows are placed in the same VR scene by virtue of own characteristics of VR equipment, and the user may see a 360-degree panoramic scene and watch the multiple live shows by moving the head, thereby improving a watching experience of the user.

According to a third aspect, the invention relates to a terminal, which may include:
a processor, and a memory configured to store an instruction executable for the processor,
wherein the processor may be configured to: acquire selection information from a user, the selection information including identifiers of at least two live shows; determine each live show corresponding to each identifier; and place each live show in the same VR scene for displaying to the user.

The technical solution provided by the embodiments of the present disclosure may achieve the following beneficial effects: the selection information of the live shows is acquired from the user, the selection information including the identifiers of at least two live shows; each live show corresponding to each identifier is determined; and each live show is placed in the same VR scene for displaying to the user. Therefore, multiple live shows are placed in the same VR scene by virtue of own characteristics of VR equipment, and the user may see a 360-degree panoramic scene and watch the multiple live shows by moving the head, thereby improving a watching experience of the user.

In one particular embodiment, the steps of the method for processing live shows are determined by computer program instructions.

Consequently, according to a fourth aspect, the invention is also directed to a computer program for executing the steps of a method for processing live shows as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing embodiment 1 of a method for processing live shows, according to an exemplary embodiment.
Fig. 2 is a flow chart showing embodiment 2 of a method for processing live shows, according to an exemplary embodiment.
Fig. 3 is a flow chart showing embodiment 3 of a method for processing live shows, according to an exemplary embodiment.
Fig. 4 is a flow chart showing embodiment 4 of a method for processing live shows, according to an exemplary embodiment.
Fig. 5 is a block diagram of embodiment 5 of a device for processing live shows, according to an exemplary embodiment.
Fig. 6 is a block diagram of embodiment 6 of a device for processing live shows, according to an exemplary embodiment.
Fig. 7 is a block diagram of an entity of a terminal, according to an exemplary embodiment.
Fig. 8 is a block diagram of terminal equipment 800, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

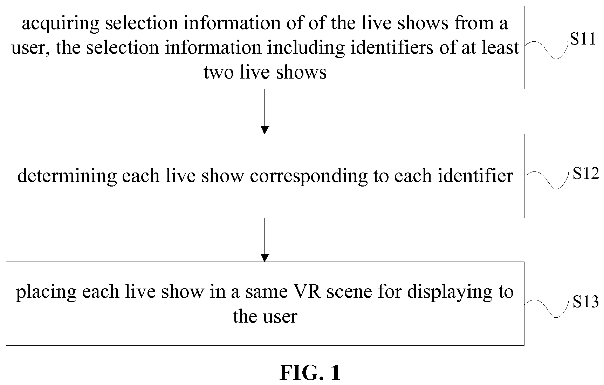

Fig. 1 is a flow chart showing embodiment 1 of a method for processing live shows, according to an exemplary embodiment. As shown in Fig. 1, the method for processing live shows is applied to a terminal, the terminal including a mobile terminal, a personal terminal and the like, such as a touch screen mobile phone, a tablet computer and a personal computer. Referring to FIG. 1, the method for processing live shows includes the following steps.

In Step S11, selection information of the live shows is acquired from the user, the selection information including identifiers of at least two live shows.

In the step, the selection information of the live shows is acquired by virtue of a terminal with a VR function or a terminal connected with VR equipment, and the selection information includes the identifiers of at least two live shows.

For example, the user selects at least two live shows on the terminal, and the selection information including the identifiers of at least two live shows may be acquired from the terminal.

In Step S12, each live show corresponding to each identifier is determined.

In the step, the terminal may determine respective live show corresponding to each identifier according to each identifier of the live shows.

For example, the terminal determines a live show A corresponding to an identifier A according to the identifier A; and moreover, the terminal determines a live show B corresponding to an identifier B according to the identifier B.

In Step S13, each live show is placed in the same VR scene for displaying to the user.

In the step, since the terminal with the VR function or the terminal connected with the VR equipment is utilized, the terminal may support a 360-degree scene by virtue of own characteristics of the VR equipment. Therefore, the terminal may place each live show in the same VR scene by virtue of a magnification effect of VR glasses, and the user may see a 360-degree panoramic scene and watch multiple live shows by moving the head.

According to the embodiment, the selection information of the live shows is acquired from the user, the selection information including the identifiers of at least two live shows; each live show corresponding to each identifier is determined; and each live show is placed in the same VR scene for displaying to the user. Therefore, multiple live shows are placed in the same VR scene by virtue of own characteristics of the VR equipment, and the user may see the 360-degree panoramic scene and watch the multiple live shows by moving the head, thereby improving a watching experience of the user.

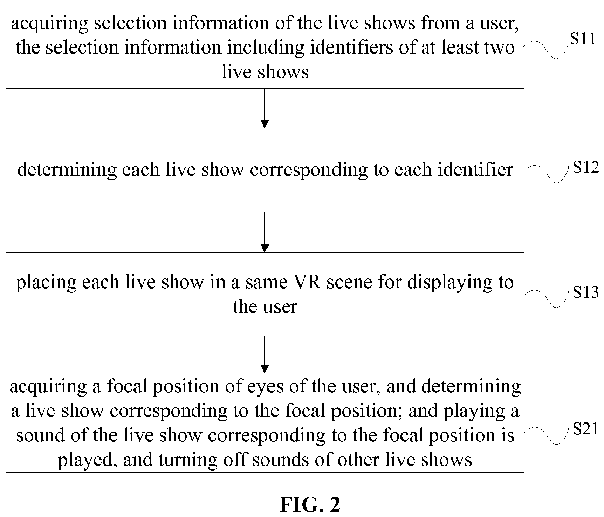

On the basis of the embodiment shown in Fig. 1, Fig. 2 is a flow chart showing embodiment 2 of a method for processing live shows, according to an exemplary embodiment. As shown in Fig. 2, after Step S13, the method further includes the following step.

In Step S21, a focal position of eyes of the user is acquired, and a live show corresponding to the focal position is determined; and a sound of the live show corresponding to the focal position is played, and sounds of other live shows are turned off.

In the step, the terminal may acquire the focal position of the eyes of the user, and further determines the live show corresponding to the focal position; and then, the sound of the live show corresponding to the focal position is played, while sounds of other live shows are turned off. Therefore, at the same time when the terminal may simultaneously place multiple live shows in the same VR scene for displaying by virtue of the magnification effect of the VR glasses, the user may dynamically select a live show of which a sound is required to be played by moving a focal point, that is, the sound of the live show where the focal point is located is played, and sounds of the other live shows are turned off.

According to the embodiment, the selection information of the live shows is acquired from the user, the selection information including the identifiers of at least two live shows; each live show corresponding to each identifier is determined; each live show is placed in the same VR scene for displaying to the user; the focal position of the eyes of the user is acquired, and a live show corresponding to the focal position is determined; and the sound of the live show corresponding to the focal position is played, and sounds of other live shows are turned off. Therefore, multiple live shows are placed in the same VR scene by virtue of own characteristics of the VR equipment, and the user may see the 360-degree panoramic scene and watch the multiple live shows by moving the head; and the user may dynamically select the live show of which the sound is required to be played by moving the focal point, that is, the sound of the live show where the focal point is located is played, and sounds of the other live shows are turned off, so that there is only one sound in the VR scene, thereby improving the watching experience of the user.

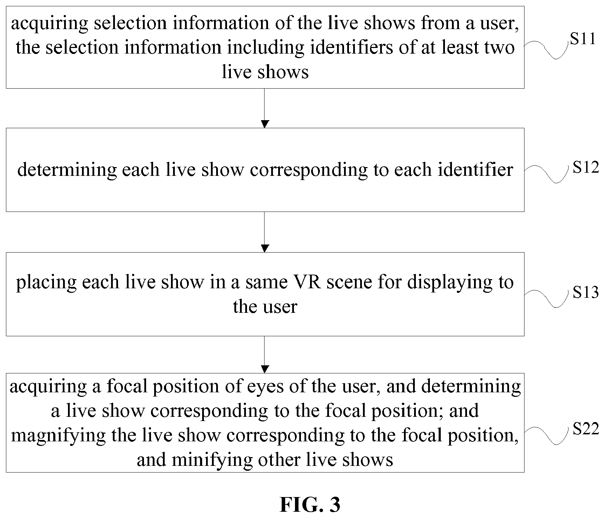

On the basis of the embodiment shown in Fig. 1, Fig. 3 is a flow chart showing embodiment 3 of a method for processing live shows, according to an exemplary embodiment. As shown in Fig. 3, after Step S13, the method further includes the following step.

In Step S22, the focal position of the eyes of the user is acquired, and the live show corresponding to the focal position is determined; and the live show corresponding to the focal position is magnified, and the other live shows are minified.

In the step, the terminal may acquire the focal position of the eyes of the user, and further determines the live show corresponding to the focal position; and then, the live show corresponding to the focal position is magnified, and meanwhile, the other live shows are minified. Therefore, at the same time when the terminal may simultaneously place multiple live shows in the same VR scene for displaying by virtue of the magnification effect of the VR glasses, the user may dynamically select a live show which is required to be magnified by moving the focal point, that is, the live show where the focal point is located is magnified, and the other live shows are minified.

According to the embodiment, the selection information of the live shows is acquired from the user, the selection information including the identifiers of at least two live shows; each live show corresponding to each identifier is determined; each live show is placed in the same VR scene for displaying to the user; the focal position of the eyes of the user is acquired, and the live show corresponding to the focal position is determined; and the live show corresponding to the focal position is magnified, and the other live shows are minified. Therefore, multiple live shows are placed in the same VR scene by virtue of own characteristics of the VR equipment, and the user may see the 360-degree panoramic scene and watch the multiple live shows by moving the head; and the user may dynamically select the live show which the is required to be magnified by moving the focal point, that is, the live show where the focal point is located is magnified, and the other live shows are minified, thereby improving the watching experience of the user.

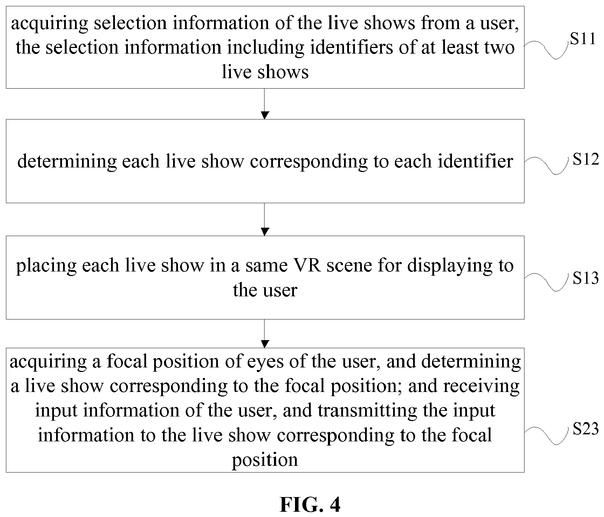

On the basis of the embodiment shown in Fig. 1, Fig. 4 is a flow chart showing embodiment 4 of a method for processing live shows, according to an exemplary embodiment. As shown in Fig. 4, after Step S13, the method further includes the following step.

In Step S23, the focal position of the eyes of the user is acquired, and the live show corresponding to the focal position is determined; and input information of the user is received and transmitted to the live show corresponding to the focal position.

The input information includes at least one of: voice information, text information and picture information.

In the step, the terminal may acquire the focal position of the eyes of the user, and further determines the live show corresponding to the focal position; and then, the user inputs the input information such as the voice information, the text information and the picture information in the terminal, the input information of the user may be acquired from the terminal, and further the terminal transmits the input information to the live show corresponding to the focal position. Therefore, at the same time when the terminal may simultaneously place multiple live shows in the same VR scene for displaying by virtue of the magnification effect of the VR glasses, the user may dynamically select a live show to be interacted by moving the focal point, and the terminal displays the input information of the user on the live show corresponding to the focal position.

According to the embodiment, the selection information of the live shows is acquired from the user, the selection information including the identifiers of at least two live shows; each live show corresponding to each identifier is determined; each live show is placed in the same VR scene for displaying to the user; the focal position of the eyes of the user is acquired, and the live show corresponding to the focal position is determined; and the input information of the user is received and transmit to the live show corresponding to the focal position. Therefore, multiple live shows are placed in the same VR scene by virtue of own characteristics of the VR equipment, and the user may see the 360-degree panoramic scene and watch the multiple live shows by moving the head; and the user may dynamically select the live show to be interacted by moving the focal point, and the terminal displays the input information of the user on the live show corresponding to the focal position, thereby further improving the watching experience of the user.

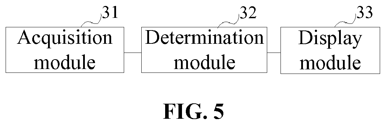

Fig. 5 is a block diagram of embodiment 5 of a device for processing live shows, according to an exemplary embodiment. Referring to Fig. 5, the device includes:
an acquisition module 31, a determination module 32 and a display module 33, wherein
the acquisition module 31 is configured to acquire selection information of the live shows from a user, the selection information including identifiers of at least two live shows;
the determination module 32 is configured to determine each live show corresponding to each identifier; and
the display module 33 is configured to place each live show in the same VR scene for displaying to the user.

With respect to the device in the above embodiment, the specific manners for performing operations for individual modules therein have been described in detail in the embodiment 1 regarding the method, which will not be elaborated herein.

According to the embodiment, the selection information of the live shows is acquired from the user, the selection information including the identifiers of at least two live shows; each live show corresponding to each identifier is determined; and each live show is placed in the same VR scene for displaying to the user. Therefore, multiple live shows are placed in the same VR scene by virtue of own characteristics of VR equipment, and the user may see a 360-degree panoramic scene and watch the multiple live shows by moving the head, thereby improving a watching experience of the user.

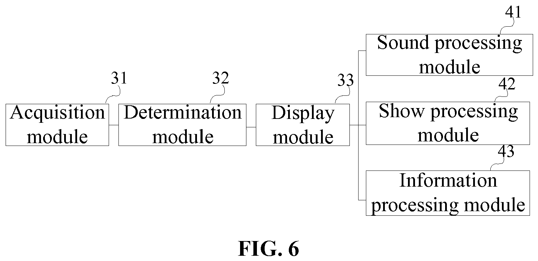

On the basis of the embodiment shown in Fig. 5, Fig. 6 is a block diagram of embodiment 6 of a device for processing live shows, according to an exemplary embodiment.

Referring to Fig. 6, the device further includes:
a sound processing module 41, configured to, after the display module 33 places each live show in the same VR scene for displaying to the user, acquire a focal position of eyes of the user, determine a live show corresponding to the focal position, play a sound of the live show corresponding to the focal position, and turn off sounds of the other live shows;
a show processing module 42, configured to, after the display module 33 places each live show in the same VR scene for displaying to the user, acquire the focal position of the eyes of the user, determine the live show corresponding to the focal position, magnify the live show corresponding to the focal position, and minify the other live shows; and
an information processing module 43, configured to, after the display module 33 places each live show in the same VR scene for displaying to the user, acquire the focal position of the eyes of the user, determine the live show corresponding to the focal position, receive input information of the user, and transmit the input information to the live show corresponding to the focal position.

The input information includes at least one of:
voice information, text information and picture information.

With respect to the device in the above embodiment, the specific manners for performing operations for individual modules therein have been described in detail in the embodiment 2, embodiment 3 and embodiment 4 regarding the method, which will not be elaborated herein.

According to the embodiment, the selection information of the live shows is acquired from the user, the selection information including the identifiers of at least two live shows; each live show corresponding to each identifier is determined; each live show is placed in the same VR scene for displaying to the user; the focal position of the eyes of the user is acquired, and the live show corresponding to the focal position is determined; and the sound of the live show corresponding to the focal position is played and the sounds of the other live shows are turned off, or the live show corresponding to the focal position is magnified and the other live shows are minified, or the input information of the user is received and transmit to the live show corresponding to the focal position. Therefore, multiple live shows are placed in the same VR scene by virtue of own characteristics of the VR equipment, and the user may see the 360-degree panoramic scene and watch the multiple live shows by moving the head; the user may dynamically select the live show of which the sound is required to be played by moving the focal point, that is, the sound of the live show where a focal point is located is played, and the sounds of the other live shows are turned off, so that there is only one sound in the VR scene; the user may dynamically select the live show which is required to be magnified by moving the focal point, that is, the live show where the focal point is located is magnified, and the other live shows are minified; and, the user may dynamically select the live show to be interacted by moving the focal point, and the terminal displays the input information of the user on the live show corresponding to the focal position; and thus the watching experience of the user is further improved.

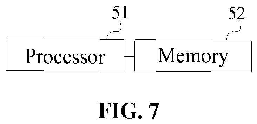

Fig. 7 is a block diagram of an entity of a terminal, according to an exemplary embodiment. Referring to Fig. 7, the terminal may specifically be implemented by: a processor 51 and a memory 52 configured to store an instruction executable for the processor.

The processor 51 is configured to: acquire selection information of the live shows from a user, the selection information including identifiers of at least two live shows; determine each live show corresponding to each identifier; and place each live show in the same VR scene for displaying to the user.

In the abovementioned embodiment, it should be understood that the processor may be a Central Processing Unit (CPU), and may also be another universal processor, a Digital Signal Processor (DSP), an Application Specific Integrated Circuit (ASIC) and the like. The universal processor may be a microprocessor or the processor may also be any conventional processor and the like. The abovementioned memory may be a Read-Only Memory (ROM), a Random Access Memory (RAM), a flash memory, a hard disk, a solid state disk or the like. A Subscriber Identity Module (SIM) card is also called as a subscriber identity card and an intelligent card, and a digital mobile phone is required to be installed with such a card for use. That is, contents such as information of a digital mobile phone client, an encryption key and a phonebook of a user are stored on a computer chip. The steps of the method disclosed by the embodiments of the present disclosure may be directly executed and implemented by a hardware processor, or are executed and implemented by combining hardware and software modules in the processor.

With respect to the terminal in the above embodiment, the specific manners for performing operations for individual modules therein have been described in detail in the embodiments regarding the method and the device, which will not be elaborated herein.

According to the embodiment, the selection information of the live shows is acquired from the user, the selection information including the identifiers of at least two live shows; each live show corresponding to each identifier is determined; and each live show is placed in the same VR scene for displaying to the user. Therefore, multiple live shows are placed in the same VR scene by virtue of own characteristics of VR equipment, and the user may see a 360-degree panoramic scene and watch the multiple live shows by moving the head, thereby improving a watching experience of the user.

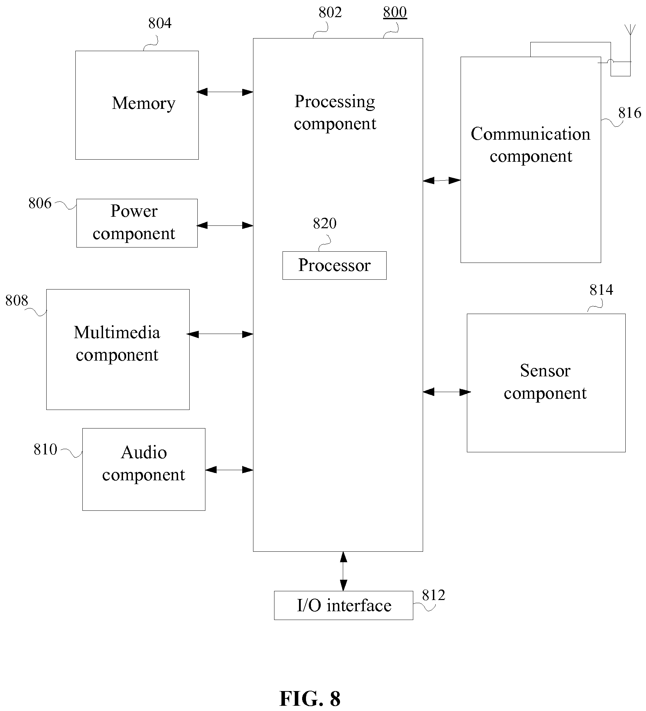

Fig. 8 is a block diagram of terminal equipment 800, according to an exemplary embodiment. For example, the terminal equipment 800 may be a mobile phone, a computer, a digital broadcast terminal, a messaging device, a gaming console, a tablet, a medical device, exercise equipment, a personal digital assistant and the like.

Referring to Fig. 8, the terminal equipment 800 may include one or more of the following components: a processing component 802, a memory 804, a power component 806, a multimedia component 808, an audio component 810, an Input/Output (I/O) interface 812, a sensor component 814, and a communication component 816.

The processing component 802 typically controls overall operations of the terminal equipment 800, such as the operations associated with display, telephone calls, data communications, camera operations, and recording operations. The processing component 802 may include one or more processors 820 to execute instructions to implement all or part of the steps in the abovementioned method. Moreover, the processing component 802 may include one or more modules which facilitate interaction between the processing component 802 and the other components. For instance, the processing component 802 may include a multimedia module to facilitate interaction between the multimedia component 808 and the processing component 802.

The memory 804 is configured to store various types of data to support the operations of the terminal equipment 800. Examples of such data include instructions for any application programs or methods operated on the terminal equipment 800, contact data, phonebook data, messages, pictures, video, etc. The memory 804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 806 provides power for various components of the terminal equipment 800. The power component 806 may include a power management system, one or more power supplies, and other components associated with the generation, management and distribution of the power for the terminal equipment 800.

The multimedia component 808 includes a screen providing an output interface between the terminal equipment 800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some embodiments, the multimedia component 808 includes a front camera and/or a rear camera. The front camera and/or the rear camera may receive external multimedia data when the terminal equipment 800 is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a Microphone (MIC), and the MIC is configured to receive an external audio signal when the terminal equipment 800 is in the operation mode, such as a call mode, a recording mode and a voice recognition mode. The received audio signal may be further stored in the memory 804 or sent through the communication component 816. In some embodiments, the audio component 810 further includes a speaker configured to output the audio signal.

The I/O interface 812 provides an interface between the processing component 802 and a peripheral interface module, and the peripheral interface module may be a keyboard, a click wheel, a button and the like. The button may include, but not limited to: a home button, a volume button, a starting button and a locking button.

The sensor component 814 includes one or more sensors configured to provide status assessment in various aspects for the terminal equipment 800. For instance, the sensor component 814 may detect an on/off status of the terminal equipment 800 and relative positioning of components, such as a display and small keyboard of the terminal equipment 800, and the sensor component 814 may further detect a change in position of the terminal equipment 800 or a component of the terminal equipment 800, presence or absence of contact between the user and the terminal equipment 800, orientation or acceleration/deceleration of the terminal equipment 800 and a change in temperature of the terminal equipment 800. The sensor component 814 may include a proximity sensor configured to detect presence of an object in its vicinity without any physical contact. The sensor component 814 may also include a light sensor, such as a Complementary Metal Oxide Semiconductor (CMOS) or Charge Coupled Device (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal equipment 800 and another devices. The terminal equipment 800 may access a communication-standard-based wireless network, such as a Wireless Fidelity (WiFi) network, a 2nd-Generation (2G) or 3rd-Generation (3G) network or a combination thereof. In an exemplary embodiment, the communication component 816 receives a broadcast signal or broadcast associated information from an external broadcast management system through a broadcast channel. In an exemplary embodiment, the communication component 816 further includes a Near Field Communciation (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a Bluetooth (BT) technology and other technologies.

In an exemplary embodiment, the terminal equipment 800 may be implemented by one or more ASICs, DSPs, Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, it is also provided a non-transitory computer-readable storage medium including an instruction, such as the memory 804 including an instruction, and the instruction may be executed by the processor 820 of the terminal equipment 800 to implement the abovementioned method. For example, the non-transitory computer-readable storage medium may be a ROM, a RAM, a Compact Disc Read-Only Memory (CD-ROM), a magnetic tape, a floppy disc, an optical data storage device and the like.

According to a non-transitory computer-readable storage medium, an instruction in the storage medium is executed by a processor of a mobile terminal to enable the mobile terminal to execute a method for processing live shows, the method including that:
selection information of the live shows is acquired from a user, the selection information including identifiers of at least two live shows;
each live show corresponding to each identifier is determined; and
each live show is placed in the same VR scene for displaying to the user.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for processing live shows, **characterized in that**, the method comprising:
acquiring selection information of the live shows from a user (S11), the selection information comprising identifiers of at least two live shows;
determining each live show corresponding to each identifier (S12); and
placing each live show in a same Virtual Reality (VR) scene for displaying to the user (S13).

2. The method of claim 1, after the step of placing each live show in the same VR scene for displaying to the user (S13), the method further comprises:
acquiring a focal position of eyes of the user, and determining a live show corresponding to the focal position (S21); and
playing a sound of the live show corresponding to the focal position, and turning off sounds of other live shows (S21).

3. The method of claim 1, after the step of placing each live show in the same VR scene for displaying to the user (S13), the method further comprises:
acquiring a focal position of eyes of the user, and determining a live show corresponding to the focal position (S22); and
magnifying the live show corresponding to the focal position, and minifying other live shows (S22).

4. The method of any one of claims 1-3, after the step of placing each live show in the same VR scene for displaying to the user (S13), the method further comprises:
acquiring the focal position of the eyes of the user, and determining the live show corresponding to the focal position (S23); and
receiving input information of the user, and transmitting the input information to the live show corresponding to the focal position (S23).

5. The method of claim 4, wherein the input information comprises at least one of:
voice information, text information and picture information.

6. A device for processing live shows, **characterized in that**, the device comprising:
an acquisition module (31), configured to acquire selection information of the live shows from a user, the selection information comprising identifiers of at least two live shows;
a determination module (32), configured to determine each live show corresponding to each identifier; and
a display module (33), configured to place each live show in a same Virtual Reality (VR) scene for displaying to the user.

7. The device of claim 6, further comprising:
a sound processing module (41), configured to, after the display module (33) places each live show in the same VR scene for displaying to the user, acquire a focal position of eyes of the user, determine a live show corresponding to the focal position, play a sound of the live show corresponding to the focal position, and turn off sounds of other live shows.

8. The device of claim 6, further comprising:
a show processing module (42), configured to, after the display module (33) places each live show in the same VR scene for displaying to the user, acquire a focal position of eyes of the user, determine a live show corresponding to the focal position, magnify the live show corresponding to the focal position, and minifying other live shows.

9. The device of any one of claims 6-8, further comprising:
an information processing module (43), configured to, after the display module (33) places each live show in the same VR scene for displaying to the user, acquire the focal position of the eyes of the user, determine the live show corresponding to the focal position, receive input information of the user, and transmit the input information to the live show corresponding to the focal position.

10. The device of claim 9, wherein the input information comprises at least one of:
voice information, text information and picture information.

11. A terminal, **characterized in that**, the terminal comprising:
a processor (51); and
a memory (52) for storing instructions executable for the processor (51),
wherein the processor (51) is configured to execute the steps of a method for processing live shows according to any one of claims 1 to 5.

12. A computer program including instructions for executing the steps of a method for processing live shows according to any one of claims 1 to 5 when said program is executed by a computer.

13. A recording medium readable by a computer and having recorded thereon a computer program including instructions for executing the steps of a method for processing live shows according to any one of claims 1 to 5.
